(19) Europäisches Patentamt
European Patent Office
Office européen des brevets

(11) **EP 4 368 331 A1**

(12) **EUROPEAN PATENT APPLICATION**

(43) Date of publication:
**15.05.2024 Bulletin 2024/20**

(21) Application number: **23206098.8**

(22) Date of filing: **26.10.2023**

(51) International Patent Classification (IPC):
*B23K 35/30* (2006.01)   *B23K 35/02* (2006.01)
*C22C 38/04* (2006.01)   *C22C 38/14* (2006.01)
*C22C 38/16* (2006.01)   *C22C 38/02* (2006.01)
*C22C 38/06* (2006.01)   *C22C 38/00* (2006.01)
*B23K 35/38* (2006.01)   *B23K 9/16* (2006.01)

(52) Cooperative Patent Classification (CPC):
**B23K 35/3073; B23K 9/16; B23K 35/0261;**
**B23K 35/38; C22C 38/002; C22C 38/02;**
**C22C 38/04; C22C 38/06; C22C 38/14; C22C 38/16**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.11.2022 JP 2022177676**

(71) Applicant: **Kabushiki Kaisha Kobe Seiko Sho**
**(Kobe Steel, Ltd.)**
**Kobe-shi, Hyogo 651-8585 (JP)**

(72) Inventors:
• **KINASHI, Hikaru**
  **Kanagawa, 251-8551 (JP)**
• **IKAI, Kazuya**
  **Kanagawa, 251-8551 (JP)**
• **YOKOTA, Yasuyuki**
  **Kanagawa, 251-8551 (JP)**

(74) Representative: **Müller-Boré & Partner**
**Patentanwälte PartG mbB**
**Friedenheimer Brücke 21**
**80639 München (DE)**

(54) **WIRE FOR GAS-SHIELDED ARC WELDING**

(57) A wire for gas-shielded arc welding contains, in mass% based on a total mass of the wire, Mn: 1.88% or more and 2.70% or less, Ti: 0.10% or more and 0.40% or less, O: more than 0.0050% and 0.0105% or less, C: 0.01% or more and 0.10% or less, Si: 0.05% or more and 0.50% or less, Cu: 0.01% or more and 0.30% or less, S: 0.001% or more and 0.020% or less, Al: 0.10% or less, P: 0.025% or less; and the remainder being Fe and inevitable impurities. The value calculated from formula (1): $1000 \times [Ti] \times [O]/([Ti] + 50 \times [O])$ is 2.13 or more and 4.30 or less, where [Ti] represents a Ti content in mass% and [O] represents an O content in mass%.

EP 4 368 331 A1

**Description**

BACKGROUND OF THE INVENTION

1. Field of the Invention

The present invention relates to a wire for gas-shielded arc welding.

2. Description of the Related Art

In recent years, technological development related to improving fuel consumption of automobiles and the like has been actively pursued to meet required higher levels of environmental performance. Possible ways to improve fuel consumption of automobiles and the like are to increase the efficiency of internal combustion engines and to advance hybridization and electrification. For electrification, since car bodies tend to become heavier than ever due to installation of batteries, development of the weight-reduction technology is simultaneously pursued. For example, an attempt to reduce the vehicle weight by reducing the thickness of steel sheets is actively carried out by using thin steel sheets that have higher strength than conventional steel sheets.

Underbody parts are exposed to a corrosive environment due to moisture from road surfaces and salt contained in snow-melting chemicals, and thus face the issue of local thinning in steel sheets. Thus, in order to achieve further weight-reduction in vehicles, underbody parts that have sufficient strength and durability despite thickness reduction are necessary, and, simultaneously, the technology that can prevent corrosion of the underbody parts is also necessary.

In general, electrodeposition coating following arc welding is employed as a method for protecting the underbody parts from the corrosive environment. However, the issue with the electrodeposition coating following welding is that the electrodeposition coating film does not form on the welding slag, generating coating defects, and corrosion develops from these defects as starting points. To address this issue, occurrence of welding defects is suppressed by increasing the thickness of the electrodeposition coating film; however, even if the coating film is formed on the slag, the force applied during driving causes separation of the coating film together with the slag, and corrosion develops from the site where separation has occurred, which is a problem.

In addition, to address corrosion, galvanized steel sheets are used in those underbody parts which are close to the road surfaces and which use thinner steel sheet so that, even when the coating film has separated, the corrosion resistance is improved by the sacrificial protection offered by zinc. However, in the weld portion, zinc evaporates due to the heat during arc welding, and the effect of improving the corrosion resistance of the weld bead cannot be sufficiently expected. Thus, corrosion inflicted by coating failure on the welding slag may occur, or, even if a coating film has been formed, corrosion may occur due to slag separation during driving.

Here, for example, Japanese Unexamined Patent Application Publication No. 62-124095 proposes a welding wire in which the C, Si, and Mn contents and the total content of at least one element selected from the group consisting of Zr, Ti, and Al are adjusted in order to prevent degradation of the durability of the parts caused by failure to form a coating film on a slag-covered portion during the electrodeposition coating after the welding. This patent document discloses that the removability of the slag attached to the weld portion after welding is excellent, and that this slag can be highly easily detached. Thus, in recent years, a method that involves physically removing the slag after welding has been employed mainly for luxury-class cars in order to secure reliability.

Japanese Patent No. 6771638 discloses a wire for gas-shielded arc welding, in which the C, Si, Mn, Ti, Cu, S, N, Al, and P contents in the wire are controlled and the Ti-to-Si content ratio is appropriately specified. This patent document describes that the O content in the wire is preferably 0.0050 mass% or less.

However, when the wire disclosed in Japanese Unexamined Patent Application Publication No. 62-124095 is used, there is an issue in that adding the slag removing step increases the number of production steps and increases the production cost.

Furthermore, in arc welding, a wire that generates less spatter is desirable in view of workability etc.

Moreover, a welded joint such as a lap joint is prone to stress concentration due to discontinuous shape, and when thickness reduction due to corrosion adds to this, fatigue fracture occurs. Thus, the weld bead toe needs to have less welding defects and be smooth.

Meanwhile, the wire disclosed in Japanese Patent No. 6771638 described above generates less spatter during welding and exhibits excellent electrodeposition coatability. Thus, a weld portion with a good bead shape can be obtained. However, recently, further improvements are needed in electrodeposition coatability and welding workability. Moreover, development of a wire that can offer sufficient effects described above even when the O content is outside the range described in Japanese Patent No. 6771638 is desirable.

SUMMARY OF THE INVENTION

The present invention has been made under the aforementioned circumstances, and an object thereof is to provide a wire for gas-shielded arc welding, with which less spatter is generated during welding, a step such as removing slag after welding is not necessary, and a weld portion that has excellent electrodeposition coatability and a good bead shape can be obtained.

The inventors of the present invention have conducted extensive studies to address issues described above, and have found that, by evenly forming thin slag on a weld portion, excellent electrodeposition coatability is obtained without having to remove the slag after welding. Specifically, by appropriately adjusting the relationship between the Ti content and the O content in the wire and by appropriately controlling the balance among the components, less spatter is generated during welding, a good bead shape is formed, and thin slag having high adhesion can be evenly formed on the weld portion. Due to the presence of the thin slag, occurrence of defects in the coating film formed on the weld portion by electrodeposition coating can be prevented.

Although the mechanism in which an electrodeposition coating film is evenly formed over the entirety as a result of evenly forming thin slag after welding is not exactly clear, presumably, the difference in electrical conductivity between thin slag and thick slag may be the reason therefor. The cause of separation of the coating film along with the slag that occurs when a thick electrodeposition coating film is formed is presumably that, when a coating film is formed on slag that is uneven and has high removability, level differences are formed on the surface of a part, and the force is likely to act during driving.

The present invention has been made on the basis of these findings.

The aforementioned object of the present invention is achieved by the features in [1] below related to a wire for gas-shielded arc welding.

[1] A wire for gas-shielded arc welding, the wire containing, based on a total mass of the wire:

Mn: 1.88 mass% or more and 2.70 mass% or less;
Ti: 0.10 mass% or more and 0.40 mass% or less;
O: more than 0.0050 mass% and 0.0105 mass% or less;
C: 0.01 mass% or more and 0.10 mass% or less;
Si: 0.05 mass% or more and 0.50 mass% or less;
Cu: 0.01 mass% or more and 0.30 mass% or less;
S: 0.001 mass% or more and 0.020 mass% or less;
Al: 0.10 mass% or less;
P: 0.025 mass% or less; and
the remainder being Fe and inevitable impurities,
in which a value calculated from formula (1) below is 2.13 or more and 4.30 or less:

$$\text{formula (1): } 1000 \times [\text{Ti}] \times [\text{O}]/([\text{Ti}] + 50 \times [\text{O}])$$

where [Ti] represents a Ti content in mass% based on the total mass of the wire and [O] represents an O content in mass% based on the total mass of the wire.

Preferable embodiments of the present invention related to the wire for gas-shielded arc welding relate to [2] and [3] below.
[2] The wire for gas-shielded arc welding described in [1], in which Si: 0.25 mass% or less.
[3] The wire for gas-shielded arc welding described in [1] or [2], in which Ti: 0.15 mass% or more.

The present invention can provide a wire for gas-shielded arc welding, with which less spatter is generated during welding, a step such as a step of removing slag after welding is not necessary, and a weld portion that has excellent electrodeposition coatability and a good bead shape can be obtained.

BRIEF DESCRIPTION OF THE DRAWINGS

Fig. 1 is a perspective view illustrating gas-shielded arc welding conditions; and
Fig. 2 is a side view illustrating the gas-shielded arc welding conditions.

DESCRIPTION OF THE PREFERRED EMBODIMENTS

Embodiments for carrying out the present invention will now be described in detail. The present invention is not limited to the embodiments described below, and can be implemented with any modifications and alterations without departing from the gist of the present invention. Hereinafter, the components contained in the wire for gas-shielded arc welding according to this embodiment are described in detail regarding the reasons these components are added and the reasons for limiting their contents. In the description below, the amounts of the components in the wire are specified as contents relative to the wire total mass.

Mn: 1.88 mass% or more and 2.70 mass% or less

Mn is a component critical for securing the desired strength of the weld metal. Since MnO has higher electrical conductivity than $SiO_2$, formation of complex slag with a higher Mn content facilitates formation of an even coating film on the slag in electrodeposition coating performed after welding.

When the Mn content in the wire is 1.88 mass% or more, weld metal with sufficient strength can be obtained, and the effect of forming a coating film on the slag can be sufficiently obtained. Thus, the Mn content in the wire based on the total mass of the wire is 1.88 mass% or more, preferably 1.95 mass% or more, more preferably 2.00 mass% or more, and yet more preferably 2.10 mass% or more.

Meanwhile, when the Mn content in the wire exceeds 2.70 mass%, deoxidation progresses excessively and the amount of oxygen in molten pool decreases. Thus, the viscosity and surface tension of the droplets increase, resulting in a poor bead shape. Thus, the Mn content in the wire based on the total mass of the wire is 2.70 mass% or less, preferably 2.60 mass% or less, more preferably 2.50 mass% or less, and yet more preferably 2.40 mass% or less.

Ti: 0.10 mass% or more and 0.40 mass% or less

Ti is one of the elements critical for the wire of the present embodiment. When Ti oxides are dispersed in the slag, generation of Si-based slag is inhibited, and, as a result, the electrodeposition coatability is improved and excellent rust prevention can be obtained.

When the Ti content in the wire is 0.10 mass% or more, the electrodeposition coatability-improving effect brought about by inhibiting generation of the Si-based slag can be sufficiently obtained. Thus, the Ti content in the wire based on the total mass of the wire is 0.10 mass% or more, preferably 0.15 mass% or more, more preferably 0.21 mass% or more, and yet more preferably more than 0.25 mass%.

Meanwhile, when the Ti content in the wire exceeds 0.40 mass%, deoxidation progresses excessively, and the amount of generated slag excessively increases. Thus, thick slag is formed, and the bead shape is degraded due to the excessive deoxidizing action. Thus, the Ti content in the wire based on the total mass of the wire is 0.40 mass% or less, preferably 0.35 mass% or less, and more preferably 0.30 mass% or less.

O: more than 0.0050 mass% and 0.0105 mass% or less

O is an element that decreases the viscosity and the surface tension and can improve detachment of droplets during welding. When the O content in the wire exceeds 0.0050 mass%, the droplets detach smoothly, and occurrence of coarse spatter during short-circuiting can be reduced. Thus, the O content in the wire based on the total mass of the wire is more than 0.0050 mass%, preferably 0.0060 mass% or more, more preferably 0.0065 mass% or more, and yet more preferably 0.0070 mass% or more.

Meanwhile, when the O content in the wire exceeds 0.0105 mass%, the droplet transfer at the wire tip during arc welding tends to be disturbed, and the molten pool is prominently shaken along with short-circuiting. Thus, the toe shape is degraded and the bead shape becomes poor. Thus, the O content in the wire based on the total mass of the wire is 0.0105 mass% or less, preferably 0.0100 mass% or less, more preferably 0.0090 mass% or less, and yet more preferably 0.0085 mass% or less.

C: 0.01 mass% or more and 0.10 mass% or less

C is a component that has a deoxidizing action and an effect of increasing the strength of the weld metal. Since thin sheets are welded by one-pass welding, there is no risk of degradation of strength caused by reheat as in the case of multilayer welding, and a strength comparable or superior to the base material can be obtained.

When the C content in the wire is less than 0.01 mass%, it becomes difficult to obtain a mild steel having a required minimum strength. Thus, the C content in the wire based on the total mass of the wire is 0.01 mass% or more, preferably 0.02 mass% or more, and more preferably 0.03 mass% or more.

Meanwhile, when the C content in the wire exceeds 0.10 mass%, the deoxidizing action intensifies, and the viscosity of the droplets increases; thus, short-circuiting occurs more frequently, and spatter generation is induced. Furthermore, by bonding with oxygen, CO is generated near the arc, and this induces spatter generation by detonation and increases the amount of fume. Thus, as long as the weld metal can secure the desired strength, the C content is preferably as small as possible. Thus, the C content in the wire based on the total mass of the wire is 0.10 mass% or less, preferably 0.09 mass% or less, and more preferably 0.08 mass% or less.

Si: 0.05 mass% or more and 0.50 mass% or less

Si is a component that has a deoxidizing action and an effect of improving the weld bead wettability.
When the Si content in the wire is 0.05 mass% or more, the weld toe can have a smooth bead shape. Furthermore, the Si phase present in the slag can increase the adhesion between the slag and the weld metal, and this also improves rust prevention. Incorporation of an appropriate amount of Si also reduces spatter during welding. Thus, the Si content in the wire based on the total mass of the wire is 0.05 mass% or more, and, in order to further suppress generation of spatter, is preferably 0.10 mass% or more, more preferably 0.12 mass% or more, and yet more preferably 0.15 mass% or more.
Meanwhile, when the Si content in the wire exceeds 0.50 mass%, aggregation is induced in the slag formed by bonding of Si with oxygen and the slag gains thickness; thus, the electrodeposition coating film is not easily formed on the surface of the slag, and coating defects occur. Thus, the Si content in the wire based on the total mass of the wire is 0.50 mass% or less, preferably 0.40 mass% or less, more preferably 0.35 mass% or less, still more preferably 0.30 mass% or less, and particularly preferably 0.25 mass% or less.

Cu: 0.01 mass% or more and 0.30 mass% or less

Cu is a component that has an effect of improving the rust prevention of the wire.
When the Cu content in the wire is 0.01 mass% or more, the effect of improving the rust prevention of the wire can be sufficiently obtained. Thus, the Cu content in the wire based on the total mass of the wire is 0.01 mass% or more, preferably 0.05 mass% or more, more preferably 0.10 mass% or more, and yet more preferably 0.15 mass% or more.
When the Cu content in the wire exceeds 0.30 mass%, it becomes difficult to obtain the required cracking resistance. Thus, the Cu content in the wire based on the total mass of the wire is 0.30 mass% or less, preferably 0.25 mass% or less, and more preferably 0.20 mass% or less.

S: 0.001 mass% or more and 0.020 mass% or less

S is an element that has a slag-aggregating effect and improves weld bead wettability. For example, when the S content in the wire is changed for the equal amount of slag, the increase in S content increases the thickness of the slag due to aggregation. Thus, for the electrodeposition coatability, the S content is preferably as small as possible. Meanwhile, for the weld bead wettability, the S content is preferably as large as possible.
If the S content in the wire is less than 0.001 mass%, the weld bead wettability is degraded. Thus, the S content in the wire based on the total mass of the wire is 0.001 mass% or more, preferably 0.003 mass% or more, and more preferably 0.005 mass% or more.
However, when the S content in the wire exceeds 0.020 mass%, it becomes difficult to evenly form thin slag on the weld metal, and this may cause failure to form an electrodeposition coating film or separation of the electrodeposition coating film along with the slag. Thus, the S content in the wire based on the total mass of the wire is 0.020 mass% or less, preferably 0.015 mass% or less, and more preferably 0.010 mass% or less.

Al: 0.10 mass% or less (including 0 mass%)

Al is a component that has a deoxidizing action and acts to change the physical properties of the slag. Specifically, Al is an element that has a slag-aggregating effect and thus degrades the adhesion of the slag. Thus, the Al content in the wire may be 0 mass%.
When the Al content in the wire exceeds 0.10 mass%, the adhesion of the slag is degraded, and the electrodeposition coatability is degraded. Thus, the Al content in the wire based on the total mass of the wire is 0.10 mass% or less, preferably 0.05 mass% or less, and more preferably 0.03 mass% or less. When Al is to be contained, the Al content is preferably 0.001 mass% or more.

P: 0.025 mass% or less (including 0 mass%)

P is an element that degrades the cracking resistance of the weld metal, and the P content in the wire is preferably as small as possible and may be 0 mass%.

When the P content in the wire exceeds 0.025 mass%, the required cracking resistance can no longer be obtained. Thus, the P content in the wire based on the total mass of the wire is 0.025 mass% or less, preferably 0.020 mass% or less, more preferably 0.015 mass% or less, and yet more preferably 0.010 mass% or less.

Value calculated from formula (1): 2.13 or more and 4.30 or less

The inventors of the present invention have found a relational expression represented by formula (1) below by using the Ti content and the O content in the wire, and have found that the state of the slag, the amount of the slag, etc., can be controlled by appropriately controlling the value calculated from formula (1).

$$\text{Formula (1): } 1000 \times [Ti] \times [O]/([Ti] + 50 \times [O])$$

where [Ti] represents the Ti content in mass% based on the total mass of the wire and [O] represents the O content in mass% based on the total mass of the wire.

By appropriately controlling the value calculated from formula (1) above, the amount of the Ti oxides in the slag can be controlled, and the ratio of the Si-based slag can be decreased. The slag adhesion can also be improved, and, as a result, the electrodeposition coatability is improved.

When the value calculated from formula (1) above is 2.13 or more, the amount of Ti oxides in the slag increases, and the ratio of the Si-based slag decreases; thus, excellent electrodeposition coatability can be obtained. Thus, the value calculated from formula (1) above is 2.13 or more, preferably 2.25 or more, and yet more preferably 2.40 or more.

Meanwhile, when the value calculated from formula (1) above exceeds 4.30, the Ti and O contents become excessively large, and excessive deoxidation occurs; thus, thick slag is formed, and the electrodeposition coatability is degraded. Thus, the value calculated from formula (1) above is 4.30 or less, preferably 4.00 or less, and yet more preferably 3.50 or less.

Remainder

The remainder of the wire of this embodiment is Fe and inevitable impurities. Examples of the inevitable impurities include Zr, Ni, Co, Li, Sn, Sb, Bi, B, Cr, Mo, N, and As.

The wire of this embodiment may contain, among the aforementioned inevitable impurities, Ni, Co, B, Sb, etc., in the range of Ni: 0.10 mass% or less, Co: 0.10 mass% or less, B: 0.01 mass% or less, Sb: 0.01 mass% or less, Cr: 0.10 mass% or less, and Mo: 0.10 mass% or less.

Shielding gas: Ar-$CO_2$ mixed gas

For the wire of this embodiment, for example, Ar-$CO_2$ mixed gas can be used as the shielding gas. When Ar-$CO_2$ mixed gas is used, the amount of slag generated by oxidation decreases due to a low O content in the shielding gas. The ratio of Ar-$CO_2$ mixed gas is, for example, 80 vol% Ar-20 vol% $CO_2$.

The welding position for welding using the wire of this embodiment is not particularly limited. In addition, the wire size (diameter) of the wire of this embodiment is not particularly limited, and the wire of this embodiment can be applied to wires having diameters specified by AWS and JIS welding material standards.

Production of wire

Production of the wire of this embodiment does not require special production conditions, and the wire can be produced by a common method. For example, a steel having the aforementioned composition is casted to obtain an ingot. The ingot is subjected to hot forging and other processes as necessary, then hot-rolled, and then cold-drawn to form a wire rod. The wire rod is annealed as necessary at a temperature of about 500°C to 900°C, pickled, then plated with copper, and, if necessary, subjected finishing drawing to a target wire diameter. Then a lubricant is applied as necessary to prepare a welding wire.

EXAMPLES

The effects of the present invention will now be specifically described through Examples and Comparative Examples; however, these examples do not limit the present invention.

Production of wire

Wires for gas-shielded arc welding 1.2 mm in diameter were produced by adjusting the contents of the components in the wire.

Gas-shielded arc welding

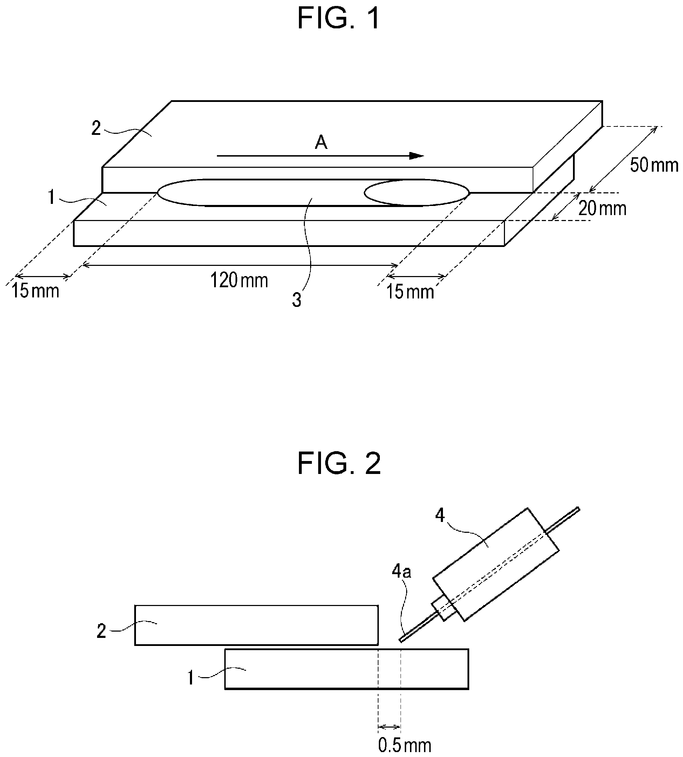

Fig. 1 is a perspective view illustrating gas-shielded arc welding conditions using wires of Examples and Comparative Examples, and Fig. 2 is a side view thereof. Two steel sheets 1 and 2 having a length of 150 mm, a width of 50 mm, and a thickness of 2.9 mm were placed horizontally, and the steel sheet 2 was placed on top of the steel sheet 1 while being displaced 20 mm in the width direction (root gap: 0 mm). A fillet portion formed between the upper surface of the steel sheet 1 and a side surface of the steel sheet 2 was subjected to horizontal fillet welding under the welding conditions indicated in Table 1 below using wires for gas-shielded arc welding of Examples and Comparative Examples.
Welding was started from a position 15 mm from one end of the steel sheets 1 and 2 in the longitudinal direction, continued in the arrow A direction for a distance of 120 mm, and ended at a position 15 mm from the other end of the steel sheets 1 and 2 in the longitudinal direction on the opposite side of the aforementioned welding start position. As a result, a weld metal 3 was formed. Furthermore, as illustrated in Fig. 2, the angle of a welding torch 4 with respect to the direction perpendicular to the steel sheet 1 was set to 45°, and the target position of a wire 4a was set to a position approximately 0.5 mm distant from an end surface of the steel sheet 2 in the width direction.

Evaluation of wires

Slag adhesion

The surface of the weld metal after welding was struck with a chisel to test whether the slag fell to evaluate the slag adhesion. For the slag adhesion, a sample in which the slag did not fall from the weld metal surface was rated o (good), and a sample in which the slag easily separated and fell was rated × (poor).

Rust prevention

After a coating film was formed by electrodeposition coating on a joint obtained by the welding, a cyclic corrosion test was carried out according to JIS K 5600-7-9 to evaluate rust prevention, which is an indicator of the electrodeposition coatability. For the rust prevention, a sample in which the ratio of the rust area generated on the weld bead after 30 cycles of the cyclic corrosion test was 0% to less than 20% was rated o (good), and a sample in which the ratio of the rust area was 20% or more was rated × (poor). Some of the test specimens were not subjected to this cyclic corrosion test, and a sample in which thin slag spread over the weld metal and the electrodeposition coatability was excellent was rated o (good), and a sample in which slag aggregated on the weld metal and the electrodeposition coatability was poor was rated × (poor).

Low spatter

On the basis of the sensory evaluation during pulsed welding, a sample that generated less spatter was rated "A" (good), a sample that generated moderately less spatter was rated "B" (fair), and a sample that generated a large amount of spatter due to frequent short-circuiting was rated "C" (poor).

Bead shape

A cross section of the produced fillet weld was embedded in a resin, and the weld toe on the lower sheet side was observed.
Observation involved a magnification of 50x. A sample with a particularly smooth shape was rated "A" (excellent), a sample with a smooth shape was rated "B" (fair), and a sample with poor conformability and a poor shape was rated "C" (poor).
The compositions of the wires used are indicated in Table 2 below, and the evaluation results of the tests are indicated in Table 3 below. In the composition of the wire, the remainder is Fe and inevitable impurities, and the content of each component in the wire is indicated in content (mass%) based on the total mass of the wire. In Table 2, formula (1) is $1000 \times [Ti] \times [O]/([Ti] + 50 \times [O])$. In Table 2, "-" in the Al column indicates that the Al content was less than 0.001 mass%. Furthermore, in the evaluation result columns in Table 3, "-" indicates that the evaluation of that item was not carried out.

Table 1

| Welding mode | Pulsed MAG welding |
|---|---|
| Welding current | 200 to 210 A |
| Arc voltage | 24 V |
| Welding rate | 800 mm/minute |
| Wire extension | 15 mm |
| Shielding gas composition | 80 vol% Ar-20 vol% $CO_2$ |
| Shielding gas flow rate | 25 L/minute |

Table 2

| | No. | Contents of chemical components in the wire (mass%, remainder: Fe and inevitable impurities) | | | | | | | | | Value calculated from formula (1) |
|---|---|---|---|---|---|---|---|---|---|---|---|
| | | Mn | Ti | O | C | Si | Al | Cu | P | S | |
| Example | 1 | 1.90 | 0.21 | 0.0079 | 0.07 | 0.06 | - | 0.18 | 0.009 | 0.004 | 2.74 |
| | 2 | 1.89 | 0.26 | 0.0091 | 0.07 | 0.06 | - | 0.19 | 0.009 | 0.004 | 3.31 |
| | 3 | 1.89 | 0.21 | 0.0053 | 0.06 | 0.07 | 0.029 | 0.18 | 0.008 | 0.004 | 2.34 |
| | 4 | 1.91 | 0.21 | 0.0097 | 0.04 | 0.06 | - | 0.17 | 0.010 | 0.004 | 2.93 |
| | 5 | 1.90 | 0.18 | 0.0098 | 0.05 | 0.06 | - | 0.19 | 0.009 | 0.004 | 2.63 |
| Comparative Example | 1 | 1.92 | 0.19 | 0.0110 | 0.05 | 0.23 | 0.001 | 0.17 | 0.015 | 0.006 | 2.82 |
| | 2 | 1.92 | 0.19 | 0.0085 | 0.05 | 0.61 | 0.001 | 0.17 | 0.015 | 0.006 | 2.63 |
| | 3 | 1.93 | 0.03 | 0.0076 | 0.05 | 0.40 | 0.001 | 0.16 | 0.012 | 0.007 | 0.56 |
| Formula (1): $1000 \times [Ti] \times [O]/([Ti] + 50 \times [O])$ | | | | | | | | | | | |

Table 3

| | No. | Evaluation results | | | |
|---|---|---|---|---|---|
| | | Slag adhesion | Rust prevention | Low spatter | Bead shape |
| Example | 1 | ○ | ○ | A | A |
| | 2 | ○ | ○ | A | A |
| | 3 | ○ | ○ | B | B |
| | 4 | ○ | ○ | A | A |
| | 5 | ○ | ○ | A | A |
| Comparative Example | 1 | ○ | ○ | - | C |
| | 2 | × | × | - | B |
| | 3 | ○ | × | - | B |

As Tables 2 and 3 indicate, the wires of Example Nos. 1 to 5 in which the components of the wire and the value obtained from formula (1) were inside the scope of the present invention generated less spatter during welding and formed good bead shapes. In addition, these Examples offered good slag adhesion, and an electrodeposition coating film could be formed in a satisfactory state without having to remove the slag. Thus, excellent rust prevention could be obtained.

In contrast, the wire of Comparative Example No. 1 exceeded the range of the O content in the wire specified by the present invention, and thus the bead shape was poor.

The wire of Comparative Example No. 2 exceeded the upper limit of the range of the Si content in the wire specified by the present invention, and thus slag adhesion degraded, and the rust prevention was poor.

In Comparative Example No. 3, the Ti content in the wire and the value calculated by formula (1) were both below the lower limits of the ranges specified by the present invention, and thus the rust prevention was poor.

As described in detail above, according to a wire for gas-shielded arc welding according to an embodiment of the present invention, less spatter is generated during welding, a step such as a step of removing slag after welding is not necessary, and a weld portion that has excellent electrodeposition coatability and a good bead shape can be obtained.

## Claims

1.   A wire for gas-shielded arc welding, the wire comprising, based on a total mass of the wire:

   Mn: 1.88 mass% or more and 2.70 mass% or less;
   Ti: 0.10 mass% or more and 0.40 mass% or less;
   O: more than 0.0050 mass% and 0.0105 mass% or less;
   C: 0.01 mass% or more and 0.10 mass% or less;
   Si: 0.05 mass% or more and 0.50 mass% or less;
   Cu: 0.01 mass% or more and 0.30 mass% or less;
   S: 0.001 mass% or more and 0.020 mass% or less;
   Al: 0.10 mass% or less;
   P: 0.025 mass% or less; and
   the remainder being Fe and inevitable impurities,
   wherein a value calculated from formula (1) below is 2.13 or more and 4.30 or less:

$$\text{formula (1): } 1000 \times [Ti] \times [O]/([Ti] + 50 \times [O])$$

   where [Ti] represents a Ti content in mass% based on the total mass of the wire and [O] represents an O content in mass% based on the total mass of the wire.

2.   The wire for gas-shielded arc welding according to claim 1, wherein
   Si: 0.25 mass% or less.

3.   The wire for gas-shielded arc welding according to claim 1 or 2, wherein
   Ti: 0.15 mass% or more.

# FIG. 1

# FIG. 2

EP 4 368 331 A1

Europäisches Patentamt
European Patent Office
Office européen des brevets

# EUROPEAN SEARCH REPORT

Application Number

EP 23 20 6098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/050014 A1 (KOBE STEEL LTD [JP]) 10 March 2022 (2022-03-10) * claims 1-19 * * tables 1-5 * * paragraphs [0008] - [0065] * | 1-3 | INV. B23K35/30 B23K35/02 C22C38/04 C22C38/14 C22C38/16 |
| A | EP 3 819 071 A1 (KOBE STEEL LTD [JP]) 12 May 2021 (2021-05-12) * claims 1-5 * * tables 1-2 * * paragraphs [0008] - [0076] * | 1-3 | C22C38/02 C22C38/06 C22C38/00 B23K35/38 B23K9/16 |
| A | JP 2003 211286 A (KOBE STEEL LTD) 29 July 2003 (2003-07-29) * the whole document * | 1-3 | |
| A | JP 2022 102850 A (NIPPON STEEL WELDING & ENG COLTD) 7 July 2022 (2022-07-07) * the whole document * | 1-3 | |
| A | JP H11 47981 A (KOBE STEEL LTD) 23 February 1999 (1999-02-23) * the whole document * | 1-3 | TECHNICAL FIELDS SEARCHED (IPC) B23K C22C |
| A | JP 2000 079495 A (KAWASAKI STEEL CO) 21 March 2000 (2000-03-21) * the whole document * | 1-3 | |
| A | JP S63 157794 A (NIPPON STEEL CORP) 30 June 1988 (1988-06-30) * the whole document * | 1-3 | |
| A | JP 2000 141080 A (KOBE STEEL LTD) 23 May 2000 (2000-05-23) * the whole document * | 1-3 | |

The present search report has been drawn up for all claims

| Place of search | Date of completion of the search | Examiner |
|---|---|---|
| The Hague | 1 April 2024 | Vlassi, Eleni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

# EP 4 368 331 A1

## ANNEX TO THE EUROPEAN SEARCH REPORT
## ON EUROPEAN PATENT APPLICATION NO.

EP 23 20 6098

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2024

| Patent document cited in search report | | Publication date | Patent family member(s) | | Publication date |
|---|---|---|---|---|---|
| WO 2022050014 | A1 | 10-03-2022 | CA | 3192605 A1 | 10-03-2022 |
| | | | CN | 115916446 A | 04-04-2023 |
| | | | JP | 7311473 B2 | 19-07-2023 |
| | | | JP | 2022042360 A | 14-03-2022 |
| | | | US | 2023264304 A1 | 24-08-2023 |
| | | | WO | 2022050014 A1 | 10-03-2022 |
| EP 3819071 | A1 | 12-05-2021 | AR | 118911 A1 | 10-11-2021 |
| | | | BR | 112022007798 A2 | 05-07-2022 |
| | | | CA | 3079735 A1 | 05-02-2021 |
| | | | CN | 114616072 A | 10-06-2022 |
| | | | CZ | 35965 U1 | 26-04-2022 |
| | | | DE | 202020005709 U1 | 21-02-2022 |
| | | | EP | 3819071 A1 | 12-05-2021 |
| | | | JP | 6771638 B1 | 21-10-2020 |
| | | | JP | 7448458 B2 | 12-03-2024 |
| | | | JP | 2021074770 A | 20-05-2021 |
| | | | JP | 2021074777 A | 20-05-2021 |
| | | | KR | 20220064409 A | 18-05-2022 |
| | | | SK | 500962021 U1 | 09-03-2022 |
| | | | US | 2021138591 A1 | 13-05-2021 |
| | | | WO | 2021090519 A1 | 14-05-2021 |
| JP 2003211286 | A | 29-07-2003 | JP | 3933937 B2 | 20-06-2007 |
| | | | JP | 2003211286 A | 29-07-2003 |
| JP 2022102850 | A | 07-07-2022 | NONE | | |
| JP H1147981 | A | 23-02-1999 | JP | 3404260 B2 | 06-05-2003 |
| | | | JP | H1147981 A | 23-02-1999 |
| JP 2000079495 | A | 21-03-2000 | JP | 3463574 B2 | 05-11-2003 |
| | | | JP | 2000079495 A | 21-03-2000 |
| JP S63157794 | A | 30-06-1988 | NONE | | |
| JP 2000141080 | A | 23-05-2000 | JP | 3436494 B2 | 11-08-2003 |
| | | | JP | 2000141080 A | 23-05-2000 |

EPO FORM P0459

For more details about this annex : see Official Journal of the European Patent Office, No. 12/82

## REFERENCES CITED IN THE DESCRIPTION

**Patent documents cited in the description**

- JP 62124095 A

- JP 6771638 B